# EUROPEAN PATENT SPECIFICATION

(11) **EP 2 705 281 B1**
(45) Date of publication and mention of the grant of the patent: **14.01.2015**
(21) Application number: 12728786.0
(22) Date of filing: 04.05.2012
(51) Int. Cl.: F16H 61/04, F16H 47/02

(54) **METHOD OF CONTROLLING A GEAR CHANGING IN A DRIVE UNIT**
VERFAHREN ZUR STEUERUNG EINES GANGWECHSELS BEI EINER ANTRIEBSEINHEIT
PROCÉDÉ POUR COMMANDER UN CHANGEMENT DE VITESSES DANS UN MÉCANISME D'ENTRAÎNEMENT

(30) Priority: 05.05.2011 IT PD20110139
(43) Date of publication of application: 12.03.2014
(73) Proprietor: Carraro Drive Tech S.p.A., 35011 Padova (IT)
(72) Inventor: FILIPPIN, Stefano, I-30030 Caltana Di S. Maria Di Sala (VE) (IT); ORNELLA, Giulio, I-33080 Zoppola (PN) (IT)
(74) Representative: Locas, Davide
(86) International application number: PCT/IB2012/052245
(87) International publication number: WO 2012/150576

(56) References cited:
- EP-A2- 1 505 320
- US-A- 5 411 450
- US-A- 5 505 113
- US-B1- 6 202 016

## Description

The present invention relates to a drive unit for vehicles of the type including a hydrostatic motor and a mechanical transmission with a variable transmission ratio.

Drive units formed by a motor of hydrostatic type combined with a mechanical transmission with a variable transmission ratio are known in general and are designed in particular for vehicles for agricultural or industrial use.

In these units, the mechanical transmission, typically a gear change, makes it possible to extend the range of speeds at which the vehicle may travel, thereby making it more suited for use on roads as well.

It will nevertheless be appreciated that the use of mechanical transmissions in these drive units entails a range of problems linked chiefly to the powers developed by the motors used in these applications.

In order to improve gear changing performance in these drive units, the mechanical transmissions used are controlled by a control system of electromechanical type which controls the gear change in order to make it at least partially automatic.

US Patent Specification 6 202 016 discloses, for instance, a drive unit which comprises a variable displacement pump associated with a hydrostatic motor and a hydraulic actuation system in order to carry out the gear change. The gear change operation is controlled by a central control unit which makes it possible to optimise the gear changing operations.

In further detail, a logic of predictive type is used to ascertain whether, once a gear change request has been made, this operation is possible by comparing a series of parameters measured in the system with the reference conditions in which the gear change can actually take place.

When it is ascertained that the gear change operation is not admissible, the transmission system remains in a stand-by condition during which the speed of the motor is varied and brought to a speed of synchronization with the gear ratio to be engaged.

While this operation is taking place, the transmission is maintained in an idle condition until the appropriate conditions for carrying out the gear change are achieved or, if these conditions are not achieved, up to a gear changing time limit.

The system uses a logic of predictive type to move closer to the conditions in which the gear change is admissible: a speed of synchronization which the motor must achieve so that the gear change may take place is determined on the basis of the characteristics of the vehicle and its drive unit.

Using a predictive logic does not, however, enable the system to be fully adaptable to the ambient conditions of use and, in order to remedy such problems, a certain margin has to be provided with respect to the gear changing limit conditions, leading in turn to an increase in the gear changing times.

Moreover, this system uses a rather complex hydraulic circuit, requiring the use of a variable displacement pump and a bypass valve to limit the pressure in the hydrostatic motor actuation circuit.

A further solution is disclosed in European Patent Application EP 1 505 320 which relates to a system for controlling a transmission in a system of the dual-clutch type.

In particular, this document discloses the use of a series of synchronizers which may selectively engage the gear ratios of a transmission of a dual-clutch type of motor-driven vehicles.

The synchronizers are also actuated with a force which varies as a function of a difference between the speed of the synchronizer and the output speed.

This system cannot, however, be adapted to industrial and agricultural vehicles actuated by hydraulic motors as the powers in play would impose excessive stresses on the synchronizer members.

The known systems are not therefore satisfactory from the point of view of performance. In practice, if it were attempted to speed up the gear changing times, and therefore also to allow incomplete synchronization, there would be a loss of comfort for the driver together with premature wear of some mechanical components.

The technical problem which the present invention therefore seeks to solve is one of providing a drive unit for vehicles which makes it possible to remedy the above-mentioned drawbacks of the prior art.

This problem is resolved by the method for controlling gear changing in a drive unit according to claim 1.

The present invention has some significant advantages. The main advantage lies in the fact that the drive unit of the present invention makes it possible to obtain high gear changing speeds, without excessively stressing the mechanical transmission members, thereby preventing their premature wear or any reduction of the ease of gear changing for the driver.

Other advantages, features and methods of use of the present invention are set out in the following detailed description of embodiments thereof, given by way of nonlimiting example. Reference is made to the accompanying drawings, in which:
- Fig. 1 is a diagrammatic illustration of a hydraulic layout of the drive unit of the present invention;
- Fig. 2 is a cross-sectional view of a mechanical transmission of the drive unit of the present invention;
- Fig. 3 is a graph showing the supply current in proportional valves for the actuation of the gear change and the relative position of a gear change actuator, respectively;
- Fig. 4 is a graph showing the curve of the speed of the hydrostatic motor, the displacement of the motor, the gear ratio engaged and a gear change request during transition from a lower to a higher gear ratio;
- Fig. 5 is a graph showing the curve of the speed of the hydrostatic motor, the displacement of the motor, the gear ratio engaged and a gear change request during transition from a higher to a lower gear ratio.

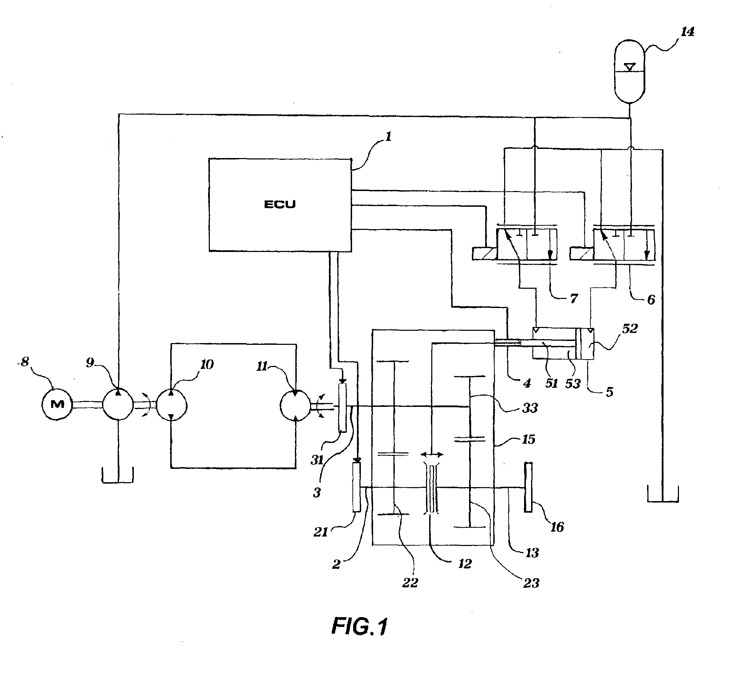

With reference initially to Fig. 1, a drive unit of the present invention includes a hydrostatic motor 11 connected to a mechanical transmission with a variable transmission ratio 15, in particular a gear change.

The hydrostatic motor 11 is actuated by a high-pressure pump 10 actuated by an endothermic motor 8. A low-pressure pump 9 is also keyed on the motor 8 and, as will be explained in further detail below, supplies a low-pressure circuit designed to actuate a gear change actuator 5 in the mechanical transmission 15.

The hydrostatic motor 11 is of the variable displacement type, i.e. such that it is possible to vary the torque supplied by the motor while also maintaining a quasi-constant speed of rotation. The motor 11 may in particular be brought to a so-called zero displacement condition in which the torque supplied by the motor 11 is substantially equal to zero. The operating characteristics of the motor 11 are controlled by an electronic control unit 1 which controls both its speed of rotation and the torque actually supplied. It will be appreciated in this respect that, as an alternative to the hydrostatic motor 11, the drive unit of the present invention may also use different types of motor, in particular electric motors, which may be controlled so as to obtain characteristics similar to those described with reference to the above-mentioned hydrostatic motor.

The output shaft of the motor 11 is keyed on an input shaft 3 of the mechanical transmission 15 on which two toothed drive gears 32, 33 are keyed, each of which engages with a respective driven gear 22, 23. The two gears have different ratios of rotation, thus providing two respective gear ratios of the transmission 15.

In order to engage the desired gear ratio, each driven gear 22, 23 may be selectively coupled to a driven shaft 2 which transmits motion to a drive shaft 13 and supplies drive to the wheels 16 of the vehicle, shown only diagrammatically in the drawings.

The coupling of the driven gears 22, 23 with the driven shaft takes place by means of a synchronizer 12 which selectively couples one of the driven gears 22 or 23 with the driven shaft 2.

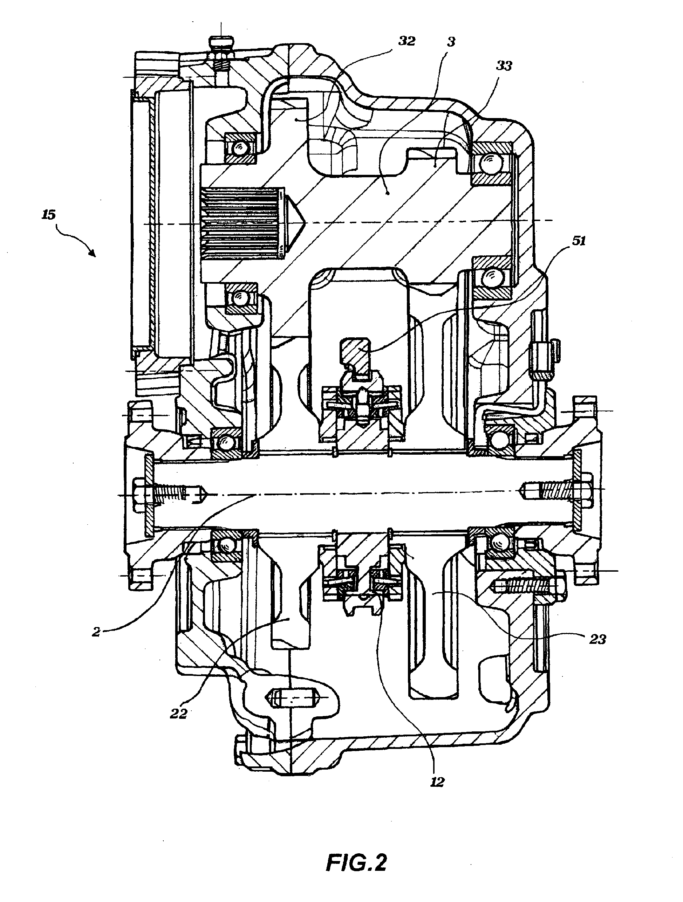

In further detail, and as shown in Fig. 2, the synchronizer 12 is keyed on the driven shaft 2 between the driven gear 22 and the driven gear 23. An actuation arm 51 makes it possible to displace the selector of the synchronizer 12 towards one of the two driven gears 22, 23 so as to transmit the motion transmitted thereto by the drive gears 32, 33 to the driven shaft 2. Consequently, depending on the position of the arm 51, the selector of the synchronizer may be displaced towards the driven gear 22, towards the driven gear 23 or into an intermediate neutral position in which the driven shaft 2 is idle.

With reference again to Fig. 1, the actuation arm 51 is connected to the piston of the hydraulic linear actuator 5.

The actuator 5 is formed by a hydraulic cylinder divided into two chambers 52 and 53 by the above-mentioned piston. The displacement of the piston within the cylinder in the axial direction takes place by varying the pressure within the chambers 52, 53 and, as shown in the drawings, by increasing the pressure in the chamber 52, the arm 51 is moved away from the hydraulic cylinder thereby bringing the selector of the synchronizer 12 towards the gear 22.

It will therefore be appreciated that the force with which the selector of the synchronizer 12 is displaced is proportional to the difference between the pressure in the chamber 52 and the pressure in the chamber 53. A higher pressure in the chamber 52 than in the chamber 53 will therefore generate a displacement of the selector of the synchronizer 12 towards the gear 22 until a condition of equilibrium is reached between the force acting on the arm 51 following the pressure on the piston of the actuator 5 and the feedback forces due to the contact between the selector of the synchronizer 12 and a respective engagement portion of the gear 22.

The pressure in the chambers 52 and 53 is governed by means of the use of respective hydraulic valves of proportional type 6 and 7. These valves are able to supply an output flow which may be varied as a function of an electrical control signal and, therefore, produce a variable pressure in the above-mentioned chambers 52 and 53.

The valves 6 and 7 are connected to the low-pressure circuit supplied by the pump 9 and the electrical control signals are controlled by means of the electronic control unit 1.

In this way, the pressure in the chambers 52 and 53 may be varied during the various stages of the gear change. In further detail, the drive unit of the present invention comprises speed sensors 21 and 31 for detecting the speed of the driven shaft 2 and of the input shaft 3 respectively. These speed sensors 21 and 31 may be formed by a crown of magnets fixed to the shafts and a contact-free sensor which detects its movement. The number of magnetic poles is preferably greater than 60 so as to be able to ensure that the speed of the shafts 2 and 3 is accurately controlled.

The sensors 21, 31 are therefore operationally connected to the proportional valves 6 and 7 by means of the electronic control unit 1 to which they are both connected.

In this way, the control unit 1 may supply the valves 6 and 7 with a control signal as function of the speed Vi, Vo of the shafts 2 and 3 or, more particularly, a difference ΔV between these speeds.

It will be appreciated that the greater the difference between the speed of the input shaft 3 and the speed of the driven shaft 2, the greater the mechanical stress to which the synchronizer 12 is subject during the synchronization operation. At the same time, the greater the force with which the synchronizer is engaged, the lower the gear changing time.

The use of a force on the synchronizer 12 which can be varied as a function of speed and possibly temperature and required performance thus makes it possible to prevent excessive wear of the mechanical components and, at the same time, to ensure rapid and easy gear changing. It will be appreciated in this respect that variability as a function of temperature may be advantageous if the drive unit is used in highly variable ambient conditions as, in this case, the temperature of the oil is a highly significant parameter for the purposes of correct operation of the synchronizer.

In addition, variability of operation may also be provided as a function of the performance required by the vehicle operator. In further detail and in any case by way of example, a control which may be actuated by the operator may be provided so that the conditions required of the vehicle may be varied, for instance by choosing between lower gear changing times and greater ease of driving.

In further detail, on the basis of the difference ΔV detected by the control unit 1 by means of the speed sensors 21 and 31, a variable control signal is transmitted to the valves 6 and 7 so as to cause the synchronizer 12 gradually to engage with the gear 22 or 23.

The position of the actuator 5 and in particular of the arm 51 is detected by a linear position sensor 4 which is preferably formed by a contact-free sensor of the Hall effect type.

The sensor 4 is also operationally connected to the control unit 1 and controls the actual position of the piston of the actuator 5.

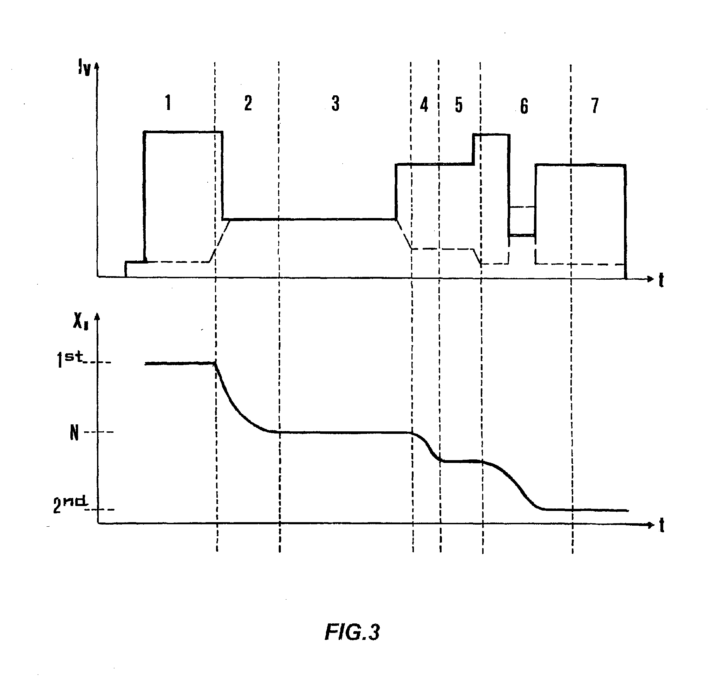

The method of controlling gear changing implemented by means of the drive unit of the present invention will now be described with reference to Figs. 3 to 5.

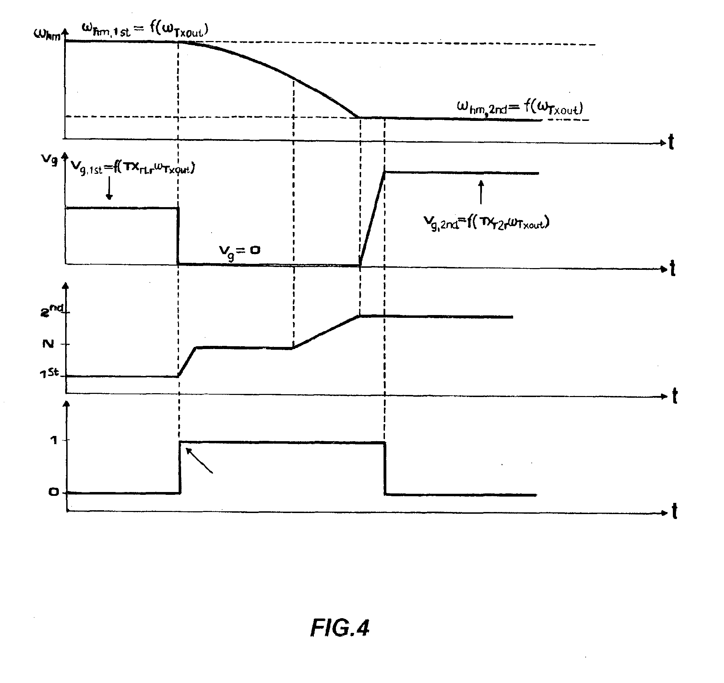

In particular, a gear ratio increase operation is shown in Figs. 3 and 4, i.e. a gear change from first to second gear, in which the second gear has a transmission ratio lower than the first.

As explained above, the gear change takes place by displacing the synchronizer 12, in particular from a position coupled with the gear 23 to a position coupled with the gear 22. In order to carry out this operation, the actuator 5 is actuated by the valves 6 and 7 in accordance with the scheme shown in the first graph of Fig. 3, in which the actuation current of the valve 6 is shown as a continuous line and the actuation current of the valve 7 is shown as a dashed line.

The stages of the gear change are shown in the second graph of Fig. 3, in which the displacement of the selector of the synchronizer is shown as a function of the gear changing time.

The gear change operation thus commences when a gear change request signal is transmitted by the driver. Once this signal is received, the control unit 1, at stage S1 of the graph of Fig. 3, supplies an electrical signal to the valve 6 such as to produce a pressure increase in the chamber 52 and carry out a pre-loading of the valve and a resulting disengagement of the synchronizer 12 which is therefore brought into an idle condition.

At this stage, the hydrostatic motor 11 is brought to a zero displacement condition, i.e., as mentioned above, it is caused to rotate with a zero output torque.

When this condition is reached, at stage S2, the current supplied to the valve 6 is decreased and the current supplied to the valve 7 is increased, until a condition of equilibrium is obtained in the actuator 5 with the synchronizer 12 still in the idle position.

By maintaining the motor 11 in this zero displacement condition and the synchronizer 12 idle, the motor 11 is accelerated or braked at the synchronization stage S3 so as to close move closer to the synchronization speed or at least to reduce the speed difference ΔV which the synchronizer has to cancel out.

The synchronization stage S3 ends at the moment at which the control unit 1 detects that the speed difference ΔV has reached a predetermined reference value ΔVref below which the synchronizer 12 will not be excessively stressed during the gear engagement operation.

When the reference speed difference value ΔVref has been reached, the control unit 1, at stage S4, acts on the valves 6 and 7 by increasing the actuation current to the valve 6 and decreasing the current to the valve 7, displacing the actuator 5 from the preceding position of equilibrium and therefore displacing the synchronizer 12 from the idle position.

In this condition, the selector of the synchronizer 12 starts to engage with the gear 22, further decreasing the speed difference Δt.

Subsequently, at stage S5, the synchronizer 12 is kept in this engaged position until, at stage S6, the synchronization speed is reached and the synchronizer 12 may be coupled with the engagement portion of the gear 22 thus making the driven shaft 2 rigid with the input shaft 3.

The coupling stage S6 takes place with an initial increase in the force transmitted to the synchronizer, once a speed close to the synchronization speed has been reached, in order to complete the coupling of the synchronizer 12 as rapidly as possible. It will be appreciated that in this condition it is possible to impart a high force to the synchronizer 12 without causing excessive stresses on its mechanical components as the speed difference ΔV is now very small.

As soon as the coupling of the synchronizer 12 has taken place and, therefore, a speed difference ΔV condition equal to zero has been reached, the current in the valves 6 and 7 is inverted, so as to stop the thrust on the synchronizer 12 by the actuator 5.

Once the actuator has ceased its displacement, which condition is detected by the linear position sensor 4, the current in the valves 6 and 7 is again inverted, at stage S7, in order to make the coupling of the synchronizer more secure. At the end of this stage S7, the valves 6 and 7 are again supplied with equal current, thereby maintaining the actuator 5 in a position of equilibrium.

The gear changing operation is also described in Fig. 4 by means of graphs which show, respectively, the curve of the motor speed ωₕₘ, the displacement Vg of the motor, the gear ratio engaged and the gear change request to the system as a function of time.

It can be seen from these graphs that the zero displacement condition is maintained until the coupling of the synchronizer 12 takes place so as to prevent excessive stresses thereon.

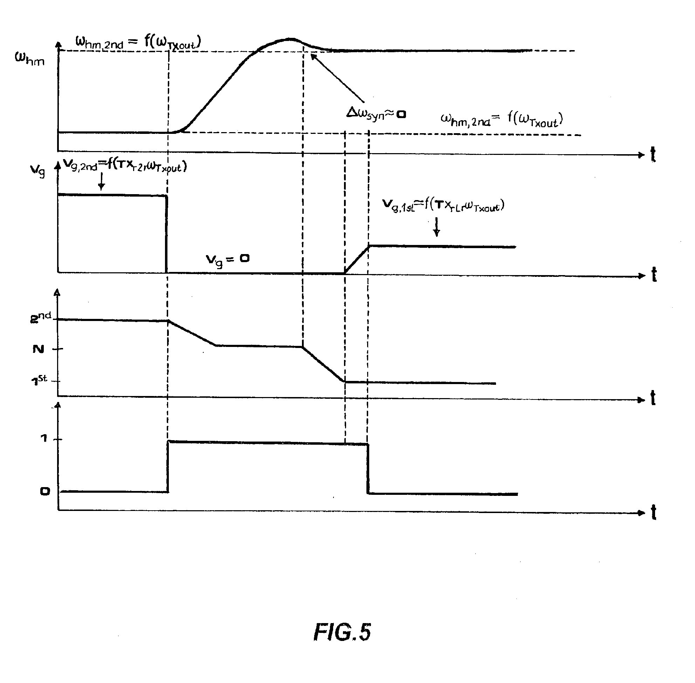

The system operates in a similar way during the upward changing operation shown by the graphs of Fig. 5. In this case as well, once the synchronizer 12 has been disengaged it is kept in the idle position and the zero displacement condition is actuated.

Therefore, once the speed difference ΔV decreases, the synchronizer intervenes and enables the desired gear ratio to be engaged.

It is thus evident that the drive unit as described makes it possible to resolve the problems discussed with reference to the present invention, through the use of the synchronizer actuated by the hydraulic actuator controlled by proportional valves which enable its gradual coupling.

It is possible in this way to obtain a rapid and accurate gear change without the risk of excessive stresses on the mechanical components used.

Moreover, the device uses particularly simple control electronics based solely on readings supplied by position and speed sensors.

Lastly, it is evident that in the case of attempts to change gear which are not compatible with the travel of the vehicle, the method of the present invention makes it possible to limit or prevent the gear change operation, on the basis of the conditions detected by the control unit 1. More particularly, the control of the drive unit of the present invention may provide for the gear change not being made, even though the operator has sent a gear change request signal, on the basis of a set of predetermined conditions. By way of example, these conditions may be identified on the basis of predetermined speed values of the vehicle and/or the endothermic motor or even temperature in the case of extremely cold ambient conditions. In this way, it is possible to prevent situations in which the gear change does not make it possible to ensure the performance required of the vehicle, or situations of incorrect engagement of the gear, with a resulting risk of loss of drive.

## Claims

1. A method of controlling gear changing in a drive unit which includes a motor (11) of the variable-displacement and hydrostatic type and a mechanical transmission (15) with a variable transmission ratio with at least two gear ratios which can be engaged selectively, wherein an input shaft (3) of the mechanical transmission (15) is connected to the motor (11) and a driven shaft (2) of the transmission (15) supplies drive to the vehicle, the mechanical transmission (15) comprising a mechanical synchronizer (12) for selectively engaging a gear ratio of the mechanical transmission, the method comprising the steps of:
a.detecting a gear-change request;
b.rendering the torque (Vg) supplied by the motor (11) to the mechanical transmission (15) substantially zero after the gear-change request;
c. detecting speed values (Vi, Vc) of an input shaft (3) and of a driven shaft (2) of the mechanical transmission;
d. calculating a speed difference value (ΔV) between the speed (Vi) of the input shaft (3) and the speed (Vc) of the driven shaft (2);
e. modifying the speed of rotation (ωₕₘ) of the motor (11) in a manner such as to reduce the speed difference (ΔV) between the speed (Vi) of the input shaft (3) and the speed (Vc) of the driven shaft (2);
f.bringing the synchronizer (12) to an idle condition after the gear-change request and maintaining the idle condition until a speed difference value (ΔV) less than or equal to a non-zero reference value (ΔVref) is detected;
g. on reaching this reference value (ΔVref), supplying an actuation force to the mechanical synchronizer (12) which may vary as a function of the speed difference (ΔV) and is suitable for causing the synchronizer (12) to engage with a driven gear (22, 23) of the mechanical transmission (15);
wherein the step of supplying a variable actuation force is performed by means of proportional hydraulic valves which are actuated by means of a variable electrical signal.

2. A method according to claim 1, wherein a mechanical synchronizer (12) is actuated by an actuator (5) in order to engage the gear ratios selectively.

3. A method according to claim 2, wherein the actuator (5) is hydraulic and is actuated by means of a pair of proportional hydraulic valves (6, 7) suitable for supplying a variable pressure to a first chamber and to a second chamber (52, 53) of the actuator (5), respectively, as a function of the speed difference value (ΔV).

4. A method according to claim 3, wherein the motor (11) further comprises speed sensors (21, 31) suitable for detecting the speed of the driven shaft (2) and of the input shaft (3), respectively, the sensors (21, 31) being functionally connected to the proportional valves (6, 7) by means of an electronic control unit (1).

5. A method according to one of the preceding claims, wherein the torque (Vg) supplied by the motor (11) is kept substantially zero until completion of the gear change.

6. A method according to one of claims 2 to 5, wherein the synchronizer (12) comprises a selector member connected to an actuating arm (51) moved by a piston of the actuator (5).

7. A drive unit according to claim 6, comprising a further step of a detecting the linear position of the actuating arm (51).

8. A method according to one of the preceding claims, wherein the mechanical transmission (15) comprises a first driven gear (22) and a second driven gear (23), the synchronizer (12) being rigid with the driven shaft and being interposed between the driven gears (22, 23) and coaxial therewith, the movement of the synchronizer (12) being suitable for engaging the first driven gear or the second driven gear (22, 23) selectively.

9. A method according to one of the preceding claims, wherein the synchronizer (12) is kept idle and in a condition of static equilibrium until the reference value (ΔVref) is reached and, subsequently, is subject to the variable actuation force suitable for causing the synchronizer (12) to engage with a driven gear (22, 23) of the mechanical transmission (15).

## Patentansprüche

1. Verfahren zur Steuerung eines Gangwechsels bei einer Antriebseinheit, die einen Motor (11) vom Typ eines hydrostatischen Verstellmotors und eine mechanische Transmission (15) mit einem variablen Übersetzungsverhältnis mit mindestens zwei Gangstufen, die selektiv eingerückt werden können, aufweist, wobei eine Eingangswelle (3) der mechanischen Transmission (15) mit dem Motor (11) verbunden ist und eine angetriebene Welle (2) der Transmission (15) Antrieb zum Fahrzeug überträgt, wobei die mechanische Transmission (15) eine mechanische Synchronisationseinrichtung (12) zum selektiven Einrücken einer Gangstufe der mechanischen Transmission umfasst, wobei das Verfahren die Schritte umfasst:
a. Erfassen einer Gangwechselanforderung;
b. nach der Gangwechselanforderung, Stellen des vom Motor (11) an die mechanische Transmission (15) übertragenen Drehmoments (Vg) auf im Wesentlichen Null;
c. Erfassen von Geschwindigkeitswerten (Vi, Vc) einer Eingangswelle (3) und einer angetriebenen Welle (2) der mechanischen Transmission;
d. Berechnen eines Geschwindigkeitsdifferenzwerts (ΔV) zwischen der Geschwindigkeit (Vi) der Eingangswelle (3) und der Geschwindigkeit (Vc) der angetriebenen Welle (2);
e. Modifizieren der Rotationsgeschwindigkeit (ωₕₘ) des Motors (11) derart, dass die Geschwindigkeitsdifferenz (ΔV) zwischen der Geschwindigkeit (Vi) der Eingangswelle (3) und der Geschwindigkeit (Vc) der angetriebenen Welle (2) verringert wird;
f. Überführen der Synchronisationseinrichtung (12) in einen Leerlaufzustand nach der Gangwechselanforderung und Beibehalten des Leerlaufzustands, bis ein Geschwindigkeitsdifferenzwert (ΔV) von kleiner oder gleich einem nicht Null betragenden Referenzwert (ΔVref) erfasst wird;
g. bei Erreichen dieses Referenzwerts (ΔVref), Beaufschlagen der mechanischen Synchronisationseinrichtung (12) mit einer Betätigungskraft, die in Abhängigkeit von der Geschwindigkeitsdifferenz (ΔV) variabel sein kann und geeignet ist, die Synchronisationseinrichtung (12) zum Eingriff an einem angetriebenen Zahnrad (22, 23) der mechanischen Transmission (15) zu veranlassen;
wobei der Schritt zum Beaufschlagen mit einer variablen Betätigungskraft mittels hydraulischer Proportionalventile durchgeführt wird, die mittels eines variablen elektrischen Signals betätigt werden.

2. Verfahren nach Anspruch 1, bei dem eine mechanische Synchronisationseinrichtung (12) von einem Aktuator (5) betätigt wird, um die Gangstufen selektiv einzurücken.

3. Verfahren nach Anspruch 2, bei dem der Aktuator (5) hydraulisch ausgebildet ist und mittels eines Paars hydraulischer Proportionalventile (6, 7) betätigt wird, die zum Beaufschlagen einer ersten Kammer bzw. einer zweiten Kammer (52, 53) des Aktuators (5) mit einem variablen Druck in Abhängigkeit vom Geschwindigkeitsdifferenzwert (ΔV) geeignet sind.

4. Verfahren nach Anspruch 3, bei dem der Motor (11) weiter Geschwindigkeitssensoren (21, 31) umfasst, die zum Erfassen der Geschwindigkeit der angetriebenen Welle (2) bzw. der Eingangswelle (3) geeignet sind, wobei die Sensoren (21, 31) mittels einer elektronischen Steuerungseinheit (1) funktionell mit den Proportionalventilen (6, 7) verbunden sind.

5. Verfahren nach einem der vorhergehenden Ansprüche, bei dem das vom Motor (11) bereitgestellte Drehmoment (Vg) im Wesentlichen auf Null gehalten wird, bis der Gangwechsel abgeschlossen ist.

6. Verfahren nach einem der Ansprüche 2 bis 5, bei dem die Synchronisationseinrichtung (12) ein Auswahlglied umfasst, das mit einem Betätigungsarm (51) verbunden ist, der durch einen Kolben des Aktuators (5) bewegt wird.

7. Antriebseinheit nach Anspruch 6, umfassend einen weiteren Schritt zum Erfassen einer linearen Position des Betätigungsarms (51).

8. Verfahren nach einem der vorhergehenden Ansprüche, bei dem die mechanische Transmission (15) ein erstes angetriebenes Zahnrad (22) und ein zweites angetriebenes Zahnrad (23) umfasst, wobei die Synchronisationseinrichtung (12) starr mit der angetriebenen Welle ausgebildet und zwischen den angetriebenen Zahnrädern (22, 23) und koaxial dazu angeordnet ist, wobei die Bewegung der Synchronisationseinrichtung (12) zum selektiven Eingriff des ersten angetriebenen Zahnrads oder des zweiten angetriebenen Zahnrads (22, 23) geeignet ist.

9. Verfahren nach einem der vorhergehenden Ansprüche, bei dem die Synchronisationseinrichtung (12) im Leerlauf und in einem Zustand statischen Gleichgewichts gehalten wird, bis der Referenzwert (ΔVref) erreicht ist, und anschließend die variable Betätigungskraft darauf einwirkt, die geeignet ist, die Synchronisationseinrichtung (12) zum Eingriff an einem angetriebenen Zahnrad (22, 23) der mechanischen Transmission (15) zu veranlassen.

## Revendications

1. Procédé de commande de changement de rapport dans une unité d'entraînement qui comprend un moteur (11) du type à déplacement variable et hydrostatique et une transmission mécanique (15) avec un rapport de transmission variable avec au moins deux rapports de transmission qui peuvent être engagés de manière sélective, dans lequel un arbre d'entrée (3) de la transmission mécanique (15) est relié au moteur (11) et un arbre entraîné (2) de la transmission (15) fournit un entraînement au véhicule, la transmission mécanique (15) comprenant un synchroniseur mécanique (12) pour engager de manière sélective un rapport de transmission de la transmission mécanique, le procédé comprenant les étapes consistant à :
a. détecter une demande de changement de rapport ;
b. rendre le couple (Vg) délivré par le moteur (11) à la transmission mécanique (15) sensiblement nul après la demande de changement de rapport ;
c. détecter les valeurs de vitesse (Vi, Vc) d'un arbre d'entrée (3) et d'un arbre entraîné (2) de la transmission mécanique ;
d. calculer une valeur de différence de vitesse (ΔV) entre la vitesse (Vi) de l'arbre d'entrée (3) et la vitesse (Vc) de l'arbre entraîné (2) ;
e. modifier la vitesse de rotation (ωₕₘ) du moteur (11) de manière à réduire la différence de vitesse (ΔV) entre la vitesse (Vi) de l'arbre d'entrée (3) et la vitesse (Vc) de l'arbre entraîné (2) ;
f. mettre le synchroniseur (12) dans une condition libre après la demande de changement de rapport et maintenir la condition libre jusqu'à ce qu'une valeur de différence de vitesse (ΔV) inférieure ou égale à une valeur de référence non nulle (ΔVref) soit détectée ;
g. lorsque cette valeur de référence (ΔVref) est atteinte, fournir une force d'actionnement au synchroniseur mécanique (12) qui peut varier en fonction de la différence de vitesse (ΔV) et qui est appropriée pour amener le synchroniseur (12) à s'engager avec un pignon entraîné (22, 23) de la transmission mécanique (15) ;
dans lequel l'étape de fourniture d'une force d'actionnement variable est effectuée au moyen de vannes hydrauliques proportionnelles qui sont actionnées au moyen d'un signal électrique variable.

2. Procédé selon la revendication 1, dans lequel un synchroniseur mécanique (12) est actionné par un actionneur (5) afin d'engager les rapports de transmission de manière sélective.

3. Procédé selon la revendication 2, dans lequel l'actionneur (5) est hydraulique et est actionné au moyen d'une paire de vannes hydrauliques proportionnelles (6, 7) appropriées pour fournir une pression variable à une première chambre et à une deuxième chambre (52, 53) de l'actionneur (5), respectivement, en fonction de la valeur de différence de vitesses (ΔV).

4. Procédé selon la revendication 3, dans lequel le moteur (11) comprend en outre des capteurs de vitesse (21, 31) appropriés pour détecter la vitesse de l'arbre entraîné (2) et de l'arbre d'entrée (3), respectivement, les capteurs (21, 31) étant connectés fonctionnellement aux vannes proportionnelles (6, 7) au moyen d'une unité de commande électronique (1).

5. Procédé selon l'une des revendications précédentes, dans lequel le couple (Vg) délivré par le moteur (11) est maintenu sensiblement nul jusqu'à l'achèvement du changement de rapport.

6. Procédé selon l'une des revendications 2 à 5, dans lequel le synchroniseur (12) comprend un élément de sélection relié à un bras d'actionnement (51) déplacé par un piston de l'actionneur (5).

7. Unité d'entraînement selon la revendication 6, comprenant une étape supplémentaire de détection de la position linéaire du bras d'actionnement (51).

8. Procédé selon l'une des revendications précédentes, dans lequel la transmission mécanique (15) comprend un premier pignon entraîné (22) et un deuxième pignon entraîné (23), le synchroniseur (12) étant relié rigidement à l'arbre entraîné et étant interposé entre les pignons entraînés (22, 23) et coaxial à ceux-ci, le déplacement du synchroniseur (12) étant approprié pour s'engager avec le premier pignon entraîné ou le deuxième pignon entraîné (22, 23) de manière sélective.

9. Procédé selon l'une des revendications précédentes, dans lequel le synchroniseur (12) est maintenu libre et dans une condition d'équilibre statique jusqu'à ce que la valeur de référence (ΔVref) soit atteinte et est, par la suite, soumis à la force d'actionnement variable appropriée pour amener le synchroniseur (12) à s'engager avec un pignon entraîné (22, 23) de la transmission mécanique (15).
